# EUROPÄISCHE PATENTSCHRIFT

(11) **EP 0 646 604 B1**
(45) Veröffentlichungstag und Bekanntmachung des Hinweises auf die Patenterteilung: **06.05.1998**
(21) Anmeldenummer: 94114770.4
(22) Anmeldetag: 20.09.1994
(51) Int. Cl.: C08F 10/00, C08F 4/64

(54) **Verfahren zur Olefinpolymerisation**
Process for olefin polymerization
Procédé de polymérisation d'oléfine

(30) Priorität: 01.10.1993 DE 4333569
(43) Veröffentlichungstag der Anmeldung: 05.04.1995
(73) Patentinhaber: TARGOR GmbH, 55116 Mainz (DE)
(72) Erfinder: Herrmann, Hans-Friedrich, Dr., D-64291 Darmstadt (DE); Spaleck, Walter, Dr., D-65835 Liederbach (DE)

(56) Entgegenhaltungen:
- EP-A- 0 426 638
- EP-A- 0 530 908
- EP-A- 0 545 303
- EP-A- 0 549 900
- EP-A- 0 576 970

## Beschreibung

Die vorliegende Erfindung bezieht sich auf ein Verfahren zur Herstellung von Polyolefinen bei hohen Temperaturen.

Bekannt sind Verfahren zur Herstellung von Polyolefinen mit Hilfe von homogenen Katalysatorsystemen, bestehend aus einer Übergangsmetallkomponente vom Typ eines Metallocens und einer Cokatalysator-Komponente, z.B. einer oligomeren Aluminiumverbindung vom Typ eines Aluminoxans, welche bei hoher Aktivität engverteilte Polymere und Copolymere liefern (EP-A-69 951, EP-A-485 822).

Die Hochdruck-Hochtemperatur Polymerisation von Ethylen mit löslichen Metallocenen ist zuerst in DE 31 50 270 bei Drücken über 100 bar und später in EP 260 999 bei Drücken über 500 bar Ethylen beschrieben worden. Bei Verweilzeiten von wenigen Minuten entstehen Polyethylene niedriger Dichte. Die bisher beschriebenen Katalysatoren ergeben jedoch in einer Ethylen Niederdruck-Polymerisation bei Temperaturen oberhalb von 100°C Polymere mit niedrigen Molekulargewichten.

Diesen Mangel versucht EP 303 519 durch Zusatz von Silizium-Verbindungen zu beheben, wobei jedoch die Polymerisationsaktivität stark beeinträchtigt wird.

In EP 416 815 wurde versucht Metallocene durch spezielle "constrained geometry" Liganden für den Bereich höherer Temperaturen geeignet zu machen. Oberhalb von 100°C entstehen jedoch breit verteilte Polymere, bzw. Copolymere mit M_{w}/Mₙ zum Teil deutlich größer 3.

Bekannt ist weiterhin, daß mit steigendem Partialdruck, d.h. steigender Konzentration des Monomeren, das Molekulargewicht der gebildeten Polymere ansteigt. Mit dieser Methode kann zwar durch Erhöhung des Monomerdrucks bis 2000 bar das Molekulargewicht erhöht werden, wobei jedoch der hohe Polymerisationsdruck einen höheren apparativen und finanziellen Aufwand erfordert.

Außerdem ist z.B. aus DE 3 808 267 bekannt, daß durch Verwendung von Hafnocenen hohe Molekulargewichte erreicht werden können. Nachteilig hierbei sind die gegenüber Zirkonocenen verringerte Polymerisationsaktivität und der höhere Preis der Hafnocene.

Aufgabe der vorliegenden Erfindung war somit ein Verfahren bereitzustellen, welches bei Temperaturen oberhalb 100°C arbeitet und die Nachteile des Standes der Technik vermeidet. Überraschend wurde gefunden, daß durch Verwendung bestimmter Metallocen-Katalysatorsysteme diese Aufgabe gelöst werden kann.

Die Erfindung betrifft somit ein Verfahren zur Herstellung von Polyolefinen durch Homopolymerisation oder Copolymerisation mindestens eines Olefins bei einer Temperatur von 100 bis 150°C und einem Druck von 0,5 bis 100 bar, in Gegenwart eines Katalysators, enthaltend mindestens ein Metallocen und mindestens einen Cokatalysator, dadurch gekennzeichnet, daß das Metallocen eine Verbindung der Formel I ist 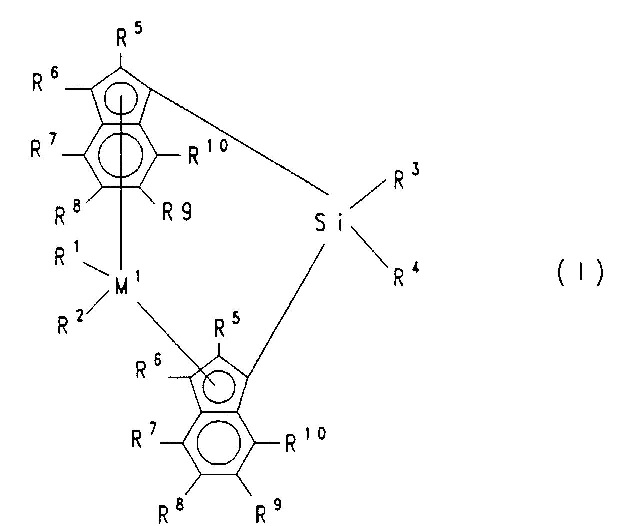 , worin M¹ Titan oder Zirkonium ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkynylgruppe, eine C₇-C₄₀-Arylalkylgruppe, eine C₈-C₄₀-Arylalkenylgruppe oder eine C₇-C₄₀-Alkylarylgruppe bedeuten, oder R³ und R⁴ jeweils zusammen mit den sie verbindenden Atomen einen Ring bilden,
R⁵, R⁶, R⁷, R⁸, R⁹ und R¹⁰ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkynylgruppe, eine C₇-C₄₀-Arylalkylgruppe, eine C₈-C₄₀-Arylalkenylgruppe oder eine C₇-C₄₀-Alkylarylgruppe bedeuten, oder zwei oder mehr der Reste R⁵, R⁶, R⁷, R⁸, R⁹ und R¹⁰ jeweils zusammen mit den sie verbindenden Atomen ein Ringsystem bilden. Bevorzugt sind R⁵ und/oder R⁷ ungleich Wasserstoff.
M¹ ist Titan oder Zirkonium, bevorzugt Zirkonium.
R¹ und R² sind gleich oder verschieden und bedeuten ein Wasserstoffatom, eine C₁-C₁₀-, vorzugsweise C₁-C₃-Alkylgruppe, insbesondere eine Methylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.
R³ und R⁴ sind gleich oder verschieden und sind ein Wasserstoffatom, ein Halogenatom, eine C₁-C₃₀-, vorzugsweise C₁-C₄-Alkylgruppe, insbesondere eine Methylgruppe, eine C₁-C₁₀-Fluoralkylgruppe, vorzugsweise CF₃-Gruppe, eine C₆-C₁₀-Fluoralkylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R³ und R⁴ bilden jeweils zusammen mit den sie verbindenden Atomen einen Ring.
R⁵, R⁶, R⁷, R⁸, R⁹ und R¹⁰ sind gleich oder verschieden und sind ein Wasserstoffatom, ein Halogenatom, eine C₁-C₃₀-, vorzugsweise C₁-C₄-Alkylgruppe, insbesondere eine Isopropylgruppe, Ethylgruppe oder Methylgruppe, eine C₁-C₁₀-Fluoralkylgruppe, vorzugsweise CF₃-Gruppe, eine C₆-C₁₀-Fluoralkylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder zwei oder mehr der Reste R⁵, R⁶, R⁷, R⁸, R⁹ oder R¹⁰ bilden jeweils zusammen mit den sie verbindenden Atomen ein Ringsystem, welches ein- oder mehrkernig ist.

Besonders bevorzugt sind Verbindungen der Formel I, worin M¹ Zirkonium ist, R¹ und R² Chlor oder Methyl, insbesondere Chlor sind, R³ und R⁴ gleich oder verschieden sind und eine C₁-C₄-Alkylgruppe, insbesondere eine Methylgruppe, oder eine Phenylgruppe sind, R⁵ eine C₁-C₄-Alkylgruppe, insbesondere eine Methyl- oder Ethylgruppe ist, R⁶ Wasserstoff ist, und R⁷, R⁸, R⁹ und R¹⁰ Wasserstoff, eine C₁-C₄-Alkylgruppe, insbesondere eine Ethyl- oder Isopropylgruppe, oder eine C₆-C₁₀-Arylgruppe, insbesondere eine Phenyl- oder Naphthylgruppe sind, oder zwei oder mehr Reste R⁷, R⁸, R⁹ und R¹⁰, insbesondere R⁷ und R⁸, bilden jeweils zusammen mit den sie verbindenden Atomen ein Ringsystem, welches ein- oder mehrkernig, insbesondere einkernig ist. Bevorzugt ist zumindest einer der Reste R⁷, R⁸, R⁹ und R¹⁰ ungleich Wasserstoff.

Besonders bevorzugt sind die folgenden Zirkonocene:
Dimethylsilandiyl-bis-1-(2-methyl-4-phenylindenyl)zirkoniumdichlorid,
Dimethylsilandiyl-bis-1-(2-methyl-4-(1-naphthyl)indenyl)zirkoniumdichorid,
Dimethylsilandiyl-bis-1-(2-ethyl-4-phenylindenyl)zirkoniumdichlorid,
Dimethylsilandiyl-bis-1-(2-ethyl-4-(1-naphthyl)indenyl)zirkoniumdichorid,
Dimethylsilandiyl-bis-1-(2-methylacenaphthylindenyl)zirkoniumdichlorid,
Dimethylsil-bis-1-(2-methyl-4,5-benzoindenyl)zirkoniumdichorid,
Phenylmethylsilandiyl-bis-1-(2-methyl-4-phenylindenyl)zirkoniumdichlorid,
Phenylmethylsilandiyl-bis-1-(2-methyl-4-(1-naphthyl)indenyl)-zirkoniumdchlorid,
Phenylmethylsilandiyl-bis-1-(2-ethyl-4-phenylindenyl)-zirkoniumdichlorid,
Phenylmethylsilandiyl-bis-1-(2-ethyl-4-naphthylindenyl)-zirkoniumdichlorid,
Phenylmethylsilandiyl-bis-1-(2-methylacenaphthindenyl)zirkoniumdichlorid,
Phenylmethylsilandiyl-bis-1-(2-methyl-4,5-benzoindenyl)zirkoniumdichlorid,
Dimethylsilandiyl-bis-1-(2-methyl-4,6-diisopropylindenyl)zirkoniumdichlorid,
Phenylmethylsilandiyl-bis-1-(2-methyl-4,6-diisopropylindenyl)-zirkoniumdichlorid,
Dimethylsilandiyl-bis-1-(2-methyl-4-ethylindenyl)-zirkoniumdichlorid und
Dimethylsilaniyl-bis-1-(2-methyl-4-isopropylindenyl)-zirkoniumdichlorid.

Die oben genannten Metallocene können in der rac-Form, in der meso-Form und als rac/meso-Mischungen, bevorzugt in der rac-Form eingesetzt werden.

Prinzipiell ist als Cokatalysator jede Verbindung geeignet, die auf Grund ihrer Lewis-Acidität das neutrale Metallocen in ein Kation überführen und dieses stabilisieren kann. Darüber hinaus soll der Cokatalysator oder das aus ihm gebildete Anion keine weiteren Reaktionen mit dem Metallocenkation eingehen.

Der Cokatalysator des erfindungsgemäß zu verwendenden Katalysators ist vorzugsweise ein Aluminoxan oder eine andere aluminiumorganische Verbindung. Das Aluminoxan ist bevorzugt eine Verbindung der Formel IIa für den linearen und/oder Formel IIb für den cyclischen Typ

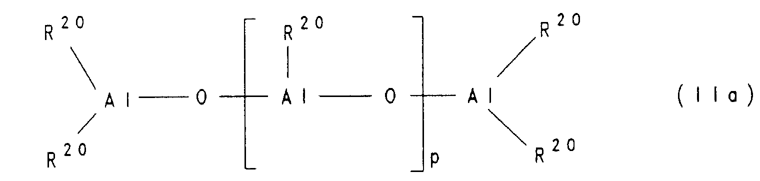

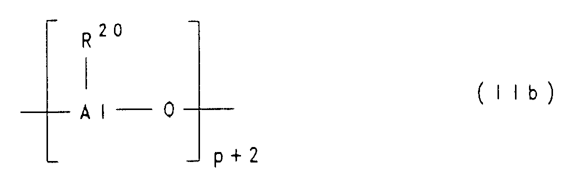

In diesen Formeln bedeutet R²⁰ eine C₁-C₆-Alkylgruppe, vorzugsweise Methyl, Ethyl, n-Butyl oder Isobutyl, insbesondere Methyl oder Butyl, und p ist eine ganze Zahl von 4 bis 30, bevorzugt 10 bis 25, wobei die Reste R²⁰ auch verschieden sein können. Besonders bevorzugt sind Methylaluminoxan und Methylbutylaluminoxan mit einem Verhältnis Methyl : Butyl = 100 : 1 bis 1 : 1, wobei Butyl n-Butyl, i-Butyl oder n-Butyl/i-Butyl-Gemische umfaßt und die Reste eine beliebige, bevorzugt statistische Verteilung besitzen.

Das Aluminoxan kann auch eine dreidimensionale Struktur aufweisen (J. Am. Chem. Soc. 1993, 115, 4971-4984).

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls oder eines Gemisches verschiedener Aluminiumtrialkyle, indem die Lösung des Aluminiumtrialkyls, vorzugsweise Aluminiumtrimethyl, mit kleinen Portionen Wasser umgesetzt werden. Dies geschieht vorzugsweise unter Kühlung und intensivem Mischen, beispielsweise mittels eines Hochgeschwindigkeitsrührers. Die bei einer derartigen Umsetzung entstehenden unlöslichen Aluminoxane können ebenfalls als Cokatalysator verwendet werden.

Eine weitere Möglichkeit ist die Herstellung von geträgerten Aluminoxanen, indem beispielsweise das Trägermaterial unter Inertbedingungen in der Lösung mindestens eines Aluminiumalkyls suspendiert und diese Suspension mit Wasser hydrolysiert wird.

Bei einem anderen Verfahren wird fein gepulvertes Kupfersulfat-pentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuSO₄.5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und das Toluol unter Vakuum abdestilliert.

Weiterhin erhält man Aluminoxane, wenn man bei einer Temperatur von -10 bis 100°C in einem inerten aliphatischen oder aromatischen Lösemittel gelöstes Aluminiumtrialkyl, mit kristallwasserhaltigen Aluminiumsalzen zur Reaktion bringt. Bevorzugt werden Heptan und Toluol sowie Aluminiumsulfat. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃.18H₂O und Al₂(SO₄)₃.16H₂O mit dem besonders hohen Kristallwassergehalt von 16 bzw. 18 mol H₂O/mol Al₂(SO₄)₃.

Nachstehend ein Beispiel zur Herstellung von Methylaluminoxan:
37,1 g Al₂(SO₄)₃.18H₂O (0,056 mol, entsprechend 1 mol H₂O) wurden in 250 cm³ Toluol suspendiert, mit 50 cm³ Trimethylaluminium (0,52 mol) versetzt und bei 20°C zur Reaktion gebracht. Nach 30 Stunden Reaktionszeit sind ca. 1 mol Methan entwickelt worden. Anschließend wurde die Lösung vom festen Aluminiumsulfat abfiltriert. Durch Abziehen des Toluols wurden 19,7 g Methylaluminoxan erhalten. Die Ausbeute betrug 63 % d.Th.. Die kryoskopisch in Benzol bestimmte mittlere Molmasse lag bei 1170. Die Anzahl der (Al(R²¹)-O)-Einheiten errechnete sich zu 20,2. Der mittlere Oligomerisationsgrad betrug also ca. 20.

Eine weitere Variante zur Herstellung von Aluminoxanen besteht darin, die beschriebenen Umsetzungen direkt in dem im Polymerisationskessel vorgelegten Suspensionsmittel oder im flüssigen Monomeren durchzuführen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, Al(R²⁰)₃ das in freier Form oder als Addukt vorliegt, gemeinsam.

Das Aluminoxan wird entweder als Lösung oder als Suspension aus den oben beschriebenen Herstellungsverfahren verwendet.

Weiterhin brauchbare aluminiumorganische Verbindungen sind solche der Formeln AlR²¹₂H, AlR²¹₃, AlR²¹₂Cl, Al₂R²¹₃Cl₃ und AlR²¹Cl₂, worin R²¹ eine C₁-C₆-Alkylgruppe, eine C₁-C₆-Fluoralkylgruppe, eine C₆-C₁₈-Arylgruppe, eine C₆-C₁₈-Fluorarylgruppe oder ein Wasserstoffatom bedeutet. Beispiele für R²¹ sind Methyl, Ethyl, i-Propyl, n-Butyl, i-Butyl oder n-Octyl.

Die Herstellung des erfindungsgemäß zu verwendenden Katalysators kann durch Umsetzung des Metallocens mit der aluminiumorganischen Verbindung auf verschiedene Weise geschehen:
1) Die aluminiumorganische Verbindung wird in einem geeigneten Lösemittel, wie beispielsweise Pentan, Hexan, Heptan, Toluol oder Dichlormethan mit dem Metallocen bei einer Temperatur von -20° bis + 120°C, bevorzugt bei 15° bis 40°C, durch intensives Mischen, beispielsweise durch Verrühren, zusammengebracht. Das molare Verhältnis Al : M¹ beträgt dabei 1 : 1 bis 10000 : 1, bevorzugt 10 : 1 bis 2000 : 1, und die Reaktionszeit 5 bis 120 Minuten, bevorzugt 10 bis 30 Minuten, bei einer Aluminium-Konzentration von größer 0,01 mol/dm³, bevorzugt größer 0,1 mol/dm³ unter Inertgas.
2) Ein unlösliches oder geträgertes Aluminoxan wird als Suspension mit einem Gehalt von 1 bis 40 Gew%, bevorzugt mit 5 bis 20 Gew%, in einem aliphatischen, inerten Suspensionsmittel wie n-Decan, Hexan, Heptan oder Dieselöl mit der Lösung des Metallocens in einem inerten Lösemittel wie Toluol, Hexan, Heptan, Dieselöl oder Dichlormethan in einem molaren Verhältnis Al : M¹ von 1 : 1 bis 10000 : 1, bevorzugt von 1 : 1 bis 2000 : 1, bei einer Temperatur von -20° bis + 120°C, bevorzugt 15° bis 40°C, während einer Reaktionszeit von 5 bis 120 Minuten, bevorzugt 10 bis 30 Minuten, unter intensivem Mischen umgesetzt.

Der nach 2) hergestellte Katalysator wird entweder als Suspension direkt zur Polymerisation eingesetzt oder durch Filtration oder Dekantieren abgetrennt und mit einem inerten Suspensionsmittel wie Toluol, n-Decan, Hexan, Heptan, Dieselöl, Dichlormethan gewaschen. Der Katalysator kann im Vakuum getrocknet und als Pulver eingesetzt oder noch mit Lösemittel behaftet wieder resuspendiert als Suspension in einem inerten Suspensionsmittel, wie beispielsweise Toluol, Hexan, Heptan oder Dieselöl in das Polymerisationssystem dosiert werden.

Als Dieselöl können Produkte mit Siedebereich 100°C - 200°C, bevorzugt mit einem Siedebereich 140°C bis 170°C verwendet werden.

Der Katalysator kann auch in geträgerter Form eingesetzt werden. Die Trägerung kann erfolgen nach 2) durch Umsetzung eines geträgerten Cokatalysators (z.B. Aluminoxans) mit einem ungeträgerten Metallocen,
3) durch Umsetzung eines geträgerten Metallocens mit einem ungeträgerten Cokatalysator (z.B. Aluminoxan),
4) durch Umsetzung des Reaktionsgemisches aus Metallocen und Cokatalysator (z.B. Aluminoxan) mit einem Trägermaterial, oder
5) durch Umsetzung von ungeträgertem Metallocen und ungeträgertem Cokatalysator (z.B. Aluminoxan) in Gegenwart eines Trägermaterials. Als Träger können anorganische Oxide, bevorzugt Kieselgele oder polymere Materialien eingesetzt werden.

Der gemäß 1), 2), 3), 4) oder 5) hergestellte Katalysator kann auch vorpolymerisiert verwendet werden. Zur Vorpolymersation wird bevorzugt eines der zu polymerisierenden Olefine verwendet.

Als Olefine können in dem erfindungsgemäßen Verfahren lineare oder verzweigte Olefine (z.B. Mono- oder Diolefine) mit 2 bis 18 C-Atomen, insbesondere Alpha-Olefine mit 2 bis 18 C-Atomen eingesetzt werden. Beispiele sind Ethylen, Propylen, 1-Buten, 2-Buten, 1-Penten, 1-Hexen, 1-Octen, 2-Methyl-1-propen, 3-Methyl-1-buten, 3-Methyl-1-penten, 4-Methyl-1-penten, 4-Methyl-1-hexen, Styrol, Cyclopenten, Cyclohexen, Norbornen, 1,3-Butadien, 1,4-Pentadien, 1,4- oder 1,5-Hexadien, 1,7-Octadien. Bevorzugt ist die Polymerisation von Ethylen sowie die Copolymerisation von Ethylen oder Propylen mit einem Olefin mit 3 bis 18 C-Atomen. Besonders bevorzugt ist die Copolymerisation von Ethylen mit einem Olefin mit 3 bis 18 C-Atomen, insbesondere einem Alpha-Olefin mit 3 bis 18 C-Atomen. Beispiele sind Ethylen/Propylen-, Ethylen/1-Buten-, Ethylen/1-Hexen- und Ethylen/1-Octan-Copolymere und Ethylen/Propylen/-1-Buten-Terpolymere.

Die Polymerisation wird diskontinuierlich oder kontinuierlich, ein- oder mehrstufig durchgeführt, wobei durch den nur geringen zeitabhängigen Abfall der Polymerisationsaktivität beliebige Verweilzeiten realisiert werden können. Die Polymerisationstemperatur beträgt 100 bis 150°C. Der Anteil der Comonomeren an der Gesamtmenge der Monomeren beträgt 0 bis 30 Mol-%, vorzugsweise 0 bis 20 Mol-%. Als Molmassenregler kann Wasserstoff zugegeben werden, wobei der Wasserstoffpartialdruck im Bereich von 0,05 bis 50 bar, vorzugsweise 0,1 bis 25 bar, insbesondere 0,2 bis 10 bar liegt. Weiterhin kann die Polymerisationstemperatur verändert werden. Breit verteilte Polymere sind zugänglich durch einen mehrstufigen Prozess oder durch Verwendung von Mischungen von mehreren Metallocenen. Darüber hinaus wird die in dem erfindungsgemäßen Verfahren erzielte Polymer-Molmasse durch die Art des verwendeten Metallocens der Formel I und durch das Verhältnis Aluminium/Zentralatom/des Metallocens (M¹) bestimmt.

Der Gesamtdruck im Polymerisationssystem beträgt 0,5 bis 100 bar. Bevorzugt ist die Polymerisation in dem technisch besonders interessanten Druckbereich von 1 bis 64 bar.

Die Polymerisationstemperatur beträgt 100 bis 150°C.

Die Polymerisation kann je nach Schmelzpunkt und Löslichkeit des entstehenden Polymers in Lösung oder Suspension sowie im Monomeren oder Monomergemisch oder in der Gasphase, bevorzugt in Lösung durchgeführt werden.

Zur Polymerisation kann vor der Zugabe des Katalysators zusätzlich eine andere Aluminiumalkylverbindung wie z.B. Trimethylaluminium, Triethylaluminium, Triisobutylaluminium oder Isoprenylaluminium zur Inertisierung des Polymerisationssystems in einer Konzentration von 1 bis 0.001 mmol Al pro kg Reaktorinhalt zugegeben werden. Darüber hinaus können diese Verbindungen auch zusätzlich zur Regelung der Molmasse eingesetzt werden.

Ein Vorteil des erfindungsgemäßen Verfahrens liegt darin, daß bei Temperaturen über 100°C engverteilte Polymere mit vergleichsweise hohem Molekulargewicht hergestellt werden können.

Außerdem weist dieses Verfahren eine hohe Polymerisationsleistung bei Temperaturen über 100°C auf und ermöglicht z.B. die Durchführung einer homogenen Lösungspolymerisation, welche, verglichen mit konventionellen geträgerten Titan-Katalysatoren, bei der Herstellung von Ethylen-Copolymeren zu homogeneren Produkten führt. Die erfindungsgemäßen Katalysatoren eignen sich daher bevorzugt zur Herstellung von LLDPE.

Darüber hinaus ermöglicht bei der Copolymerisation der statistische Einbau des Comonomeren durch die verbrückten Metallocen-Katalysatoren eine effektive Steuerung der Dichte im Copolymer, wodurch der Verbrauch an teurem Comonomer verringert wird. Die entstehenden Produkte zeigen bei einer Fraktionierung keine Anreicherung von Comonomeren in den niedermolekularen Fraktionen, sondern eine einheitliche Verteilung der Seitenketten über den Molmassenbereich des Copolymers. Hierdurch werden auch bei niedrigen Dichten verringerte extrahierbare Anteile beobachtet.

Die nachfolgenden Beispiele sollen die Erfindung näher erläutern.
Es bedeuten 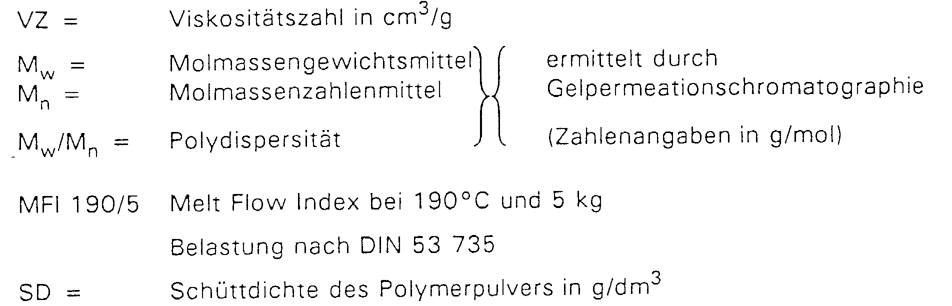 Schmelzpunkte, Kristallisationspunkte, deren Halbwertsbreiten, die Schmelz- und Kristallisationsenthalpien sowie die Glastemperaturen (T_{g}) wurden durch DSC-Messungen (10°C/min Aufheiz-/Abkühlgeschwindigkeit) bestimmt.

### Beispiele

Alle Glasgeräte wurden im Vakuum ausgeheizt und mit Argon gespült. Alle Operationen wurden unter Ausschluß von Feuchtigkeit und Sauerstoff in Schlenk-Gefäßen durchgeführt. Die verwendeten Lösungsmittel wurden unter Argon jeweils frisch über Na/K-Legierung destilliert und in Schlenk-Gefäßen unter Inertgas aufbewahrt.

Die Synthese des Metallocens rac-Dimethylsilandiyl-bis-1-(2-methyl-4-phenylindenyl)zirkoniumdichlorid erfolgt gemäß EP-A-576 970. Die Synthese des Metallocens rac-Dimethylsilandiyl-bis-1-(2-methylacenaphthindenyl)zirkoniumdichlorid erfolgt gemäß EP-A-549 900. Die Synthese des Metallocens rac-Dimethylsilandiyl-bis-1-(2-methyl-4,5-benzoindenyl)zirkoniumdichlorid erfolgt gemäß EP-A-549 900.

Methylaluminoxan wird als ca. 10 Gew.-% Lösung in Toluol von der Witco GmbH bezogen und enthält gemäß Aluminium-Bestimmung 36 mg Al/ml Lösung. Der mittlere Oligomerisationsgrad gemäß Gefrierpunktserniedrigung in Benzol beträgt n = 20.

### Beispiel 1

Ein trockener 1,5 dm³ Rührreaktor wird zur Entfernung des Sauerstoffs mit Stickstoff gespült und mit 0,9 dm³ eines inerten Dieselöls (Sdp. 140 - 170°C) befüllt. Nach Spülen mit Ethylen wird auf 120°C temperiert. Parallel hierzu werden 0,3 mg rac-Dimethylsilandiyl-bis-1,1'-(2-Methyl-4-Phenyl-indenyl)zirkoniumdichlorid in 10 ml einer Lösung von Methylaluminoxan in Toluol (12 mmol Al) gelöst und 15 min. voraktiviert. Die Polymersiation wird duch Dosieren der Katalysator-Lösung gestartet und der Ethylen-Druck auf 4 bar angehoben. Nach 1 h Polymerisationszeit wird der Reaktor entspannt, abgekühlt und die Suspension abgelassen. Nach Filtration und 12 h Trocknen im Vakuum-Trockenschrank resultieren 23 g Polyethylen entsprechend einer reduzierten Kontakt-Zeit-Ausbeute (KZA_{red}) von 12 kg/(mmolZr*h*bar) mit einer Schüttdichte von 0,205 kg/dm³ und einer VZ von 170 cm³/g. Die Molmassenverteilung (nach GPC) beträgt M_{w}/Mₙ = 2,4.

### Beispiel 2

Beispiel 1 wurde wiederholt, wobei zur Herstellung der Katalysatorlösung 0,5 mg Dimethylsilandiyl-bis-(2-methyl-acenaphthindenyl)zirkoniumdichlorid verwendet wurde. Es resultierten 16 g Polyethylen entsprechend einer KZA_{red} von 4,7 kg/(mmolZr*h*bar) mit einer Schüttdichte von 0,190 kg/dm³ und einer VZ von 211 cm³/g. Die Molmassenverteilung (nach GPC) beträgt M_{w}/Mₙ = 2,5.

### Beispiel 3

Beispiel 1 wurde wiederholt, wobei zur Herstellung der Katalysatorlösung 0,4 mg rac-Dimethylsilandiyl-bis-1-(2-methyl-4,5-benzoindenyl)zirkoniumdichlorid verwendet wurde. Es resultierten 19 g Polyethylen entsprechend einer KZA_{red} von 6,9 kg/(mmolZr*h*bar) mit einer Schüttdichte von 0,210 kg/dm³ und einer VZ von 221 cm³/g. Die Molmassenverteilung (nach GPC) beträgt M_{w}/Mₙ = 2,4.

### Beispiel 4

Beispiel 1 wurde bei 140°C und einem Druck von 7 bar Ethylen wiederholt. Nach dem Abkühlen wurde Polyethylen entsprechend einer KZA_{red} von 2,0 kg (mmolZr*h*bar) erhalten, mit einer VZ von 167 cm³/g. Die Molmassenverteilung (nach GPC) beträgt M_{w}/Mₙ = 2,3.

### Beispiel 5

Ein trockener 16 dm³ Rührreaktor wird zur Entfernung des Sauerstoffs mit Stickstoff gespült und mit 8 dm³ eines inerten Dieselöls (Sdp. 140-170°C) sowie 300 ml 1-Hexen befüllt. Anschließend wird auf 120°C temperiert und der Druck mit 8 bar Ethylen angehoben.
Parallel hierzu werden 4 mg rac-Dimethylsilyl-bis-1,1'-(2-methyl-4-phenylindenyl)-zirkoniumdichlorid in 10 ml einer Lösung von Methylaluminoxan in Toluol (12 mmol Al) gelöst und 15 min. voraktiviert.

Die Polymerisation wird durch Dosieren der Katalysator-Lösung über eine Schleuse gestartet und der Gesamt-Druck durch nachdosieren von Ethylen konstant gehalten. Nach 1/2 h Polymerisationszeit wird die Reaktion mit Methanol gestoppt, der Reaktor entspannt, auf 20°C abgekühlt und die Suspension abgelassen. Nach Filtration und 12 h Trocknen im Vacuum-Trockenschrank resultieren 408 g Polymer entsprechend einer KZA-_{red} von 16 kg/(mmolZr*h*bar) und einer VZ von 180 cm³/g. Der MFI 190/5 beträgt 4,26 g/10 min bei einer Dichte von 0,934 g/cm³.

### Vergleichsbeispiel 1

Beispiel 1 wurde wiederholt, wobei zur Herstellung der Katalysatorlösung 0,4 mg Bis(n-butylcyclopentadienyl)zirkoniumdichlorid verwendet wurde. Nach Einengen des gesamten Suspensionsmittels resultierten 4 g Polyethylen-Wachs entsprechend einer KZA_{red} von 0,98 kg/(mmolZr*h*bar) mit einer VZ von 40 cm³/g.

### Vergleichsbeispiel 2

Vergleichsbeispiel 1 wurde mit 0,4 mg Bisindenylzirkoniumdichlorid wiederholt. Es resultieren 3 g Polyethylen-Wachs entsprechend einer KZA_{red} von 0,74 kg/(mmolZr*h*bar) mit einer VZ von 46 cm³/g.

## Patentansprüche

1. Verfahren zur Herstellung von Polyolefinen durch Homopolymerisation oder Copolymerisation mindestens eines Olefins bei einer Temperatur von 100 bis 150°C und einem Druck von 0,5 bis 100 bar, in Gegenwart eines Katalysators, enthaltend mindestens ein Metallocen und mindestens einen Cokatalysator, dadurch gekennzeichnet, daß das Metallocen eine Verbindung der Formel I ist 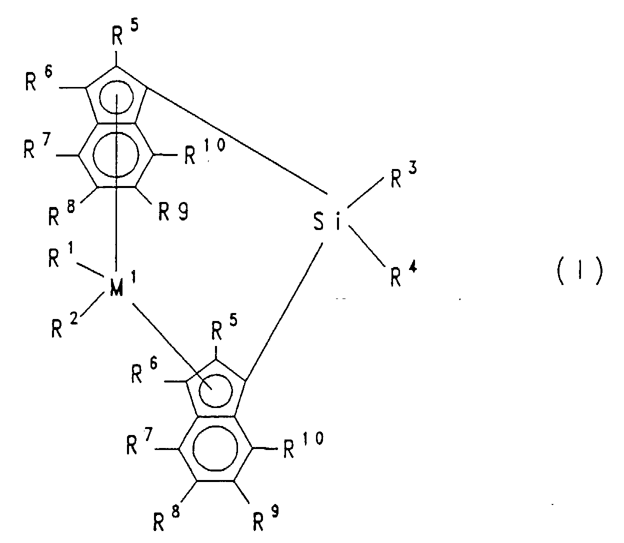 , worin M¹ Titan oder Zirkonium ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkynylgruppe, eine C₇-C₄₀-Arylalkylgruppe, eine C₈-C₄₀-Arylalkenylgruppe oder eine C₇-C₄₀-Alkylarylgruppe bedeuten, oder R³ und R⁴ jeweils zusammen mit den sie verbindenden Atomen einen Ring bilden,
R⁵, R⁶, R⁷, R⁸, R⁹ und R¹⁰ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkynylgruppe, eine C₇-C₄₀-Arylalkylgruppe, eine C₈-C₄₀-Arylalkenylgruppe oder eine C₇-C₄₀-Alkylarylgruppe bedeuten, oder zwei oder mehr der Reste R⁵, R⁶, R⁷, R⁸, R⁹ und R¹⁰ jeweils zusammen mit den sie verbindenden Atomen ein Ringsystem bilden.

2. Verfahren gemäß Anspruch 1, dadurch gekennzeichnet, daß das Metallocen eine Verbindung der Formel I ist, worin M¹ Zirkonium ist, R¹ und R² Chlor oder Methyl sind, R³ und R⁴ gleich oder verschieden sind und eine C₁-C₄-Alkylgruppe oder eine Phenylgruppe sind, R⁵ eine C₁-C₄-Alkylgruppe ist, R⁶ Wasserstoff ist, und R⁷, R⁸, R⁹ und R¹⁰ Wasserstoff, eine C₁-C₄-Alkylgruppe oder eine C₆-C₁₀-Arylgruppe sind, oder zwei oder mehr Reste R⁷, R⁸, R⁹ und R¹⁰ jeweils zusammen mit den sie verbindenden Atomen ein Ringsystem bilden.

3. Verfahren gemäß Anspruch 1, dadurch gekennzeichnet, daß das Metallocen der Formel I
Dimethylsilandiyl-bis-1-(2-methyl-4-phenylindenyl)zirkoniumdichlorid,
Dimethylsilandiyl-bis-1-(2-methyl-4-(1-naphthyl)indenyl)zirkoniumdichlorid,
Dimethylsilandiyl-bis-1-(2-ethyl-4-phenylindenyl)zirkoniumdichlorid,
Dimethylsilandiyl-bis-1-(2-ethyl-4-(1-naphthyl)indenyl)zirkoniumdichlorid,
Dimethylsilandiyl-bis-1-(2-methylacenaphthylindenyl)zirkoniumdichlorid,
Dimethylsil-bis-1-(2-methyl-4,5-benzoindenyl)zirkoniumdichlorid,
Phenylmethylsilandiyl-bis-1-(2-methyl-4-phenylindenyl)zirkoniumdichlorid,
Phenylmethylsilandiyl-bis-1-(2-methyl-4-(1-naphthyl)indenyl)-zirkoniumdichlorid,
Phenylmethylsilandiyl-bis-1-(2-ethyl-4-phenylindenyl)-zirkoniumdichlorid,
Phenylmethylsilandiyl-bis-1-(2-ethyl-4-naphthylindenyl)-zirkoniumdichlorid,
Phenylmethylsilandiyl-bis-1-(2-methylacenaphthindenyl)zirkoniumdichlorid,
Phenylmethylsilandiyl-bis-1-(2-methyl-4,5-benzoindenyl)zirkoniumdichlorid,
Dimethylsilandiyl-bis-1-(2-methyl-4,6-diisopropylindenyl)zirkoniumdichlorid,
Phenylmethylsilandiyl-bis-1-(2-methyl-4,6-diisopropylindenyl)-zirkoniumdichlorid,
Dimethylsilandiyl-bis-1-(2-methyl-4-ethylindenyl)-zirkoniumdichlorid oder
Dimethylsilaniyl-bis-1-(2-methyl-4-isopropylindenyl)-zirkoniumdichlorid ist.

4. Verfahren gemäß einem oder mehreren der Ansprüche 1 bis 3, dadurch gekennzeichnet, daß als Cokatalysator ein Aluminoxan verwendet wird.

5. Verfahren nach einem oder mehreren der Ansprüche 1 bis 4, dadurch gekennzeichnet, daß Olefine oder Diolefine mit 2 bis 18 C-Atomen polymerisiert oder copolymerisiert werden.

6. Verfahren gemäß einem oder mehreren der Ansprüchen 1 bis 5, dadurch gekennzeichnet, daß der Katalysator geträgert und/oder vorpolymerisiert eingesetzt wird.

## Claims

1. A process for the preparation of polyolefins by homopolymerization or copolymerization of at least one olefin at a temperature of 100 to 150°C and at a pressure of 0.5 to 100 bar, in the presence of a catalyst, comprising at least one metallocene and at least one cocatalyst, wherein the metallocene is a compound of the formula I 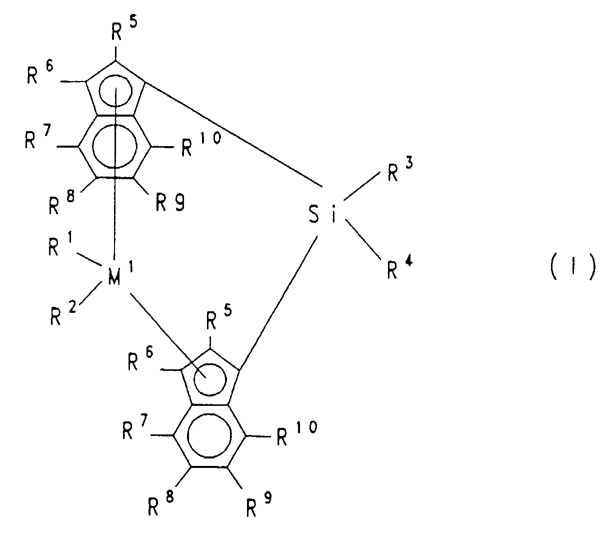 where M¹ is titanium or zirconium,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₃₀-alkyl group, a C₁-C₁₀- fluoroalkyl group, a C₆-C₁₀-fluoroaryl group, a C₆-C₁₀- aryl group, a C₁-C₁₀-alkoxy group, a C₂-C₁₀-alkynyl group, a C₇-C₄₀-arylalkyl group, a C₈-C₄₀-arylalkenyl group or a C₇-C₄₀-alkylaryl group, or R³ and R⁴ together with the atoms connecting them form a ring,
R⁵, R⁶, R⁷, R⁸, R⁹ and R¹⁰ are identical or different and are a hydrogen atom, a halogen atom, a C₁-C₃₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkynyl group, a C₇-C₄₀-arylalkyl group, a C₈-C₄₀-arylalkenyl group or a C₇-C₄₀-alkylaryl group, or two or more of the radicals R⁵, R⁶, R⁷, R⁸, R⁹ and R¹⁰ in each case together with the atoms connecting them form a ring system.

2. The process as claimed in claim 1, wherein the metallocene is a compound of the formula I in which M¹ is zirconium, R¹ and R² are chlorine or methyl, R³ and R⁴ are identical or different and are a C₁-C₄-alkyl group or a phenyl group, R⁵ is a C₁-C₄-alkyl group, R⁶ is hydrogen and R⁷, R⁸, R⁹ and R¹⁰ are hydrogen, a C₁-C₄-alkyl group or a C₆-C₁₀-aryl group, or two or more radicals R⁷, R⁸, R⁹ and R¹⁰ in each case together with the atoms connecting them form a ring system.

3. The process as claimed in claim 1, wherein the metallocene of the formula I is
dimethylsilanediyl-bis-1-(2-methyl-4-phenylindenyl)zirconium dichloride,
dimethylsilanediyl-bis-1-(2-methyl-4-(1-naphthyl)indenyl)zirconium dichloride,
dimethylsilanediyl-bis-1-(2-ethyl-4-phenylindenyl)zirconium dichloride,
dimethylsilanediyl-bis-1-(2-ethyl-4-(1-naphthyl)indenyl)zirconium dichloride,
dimethylsilanediyl-bis-1-(2-methylacenaphthylindenyl)zirconium dichloride,
dimethylsilanediyl-bis-1-(2-methyl-4,5-benzoindenyl)zirconium dichloride,
phenylmethylsilanediyl-bis-1-(2-methyl-4-phenylindenyl)zirconium dichloride,
phenylmethylsilanediyl-bis-1-(2-methyl-4-(1-naphthyl)indenyl)zirconium dichloride,
phenylmethylsilanediyl-bis-1-(2-ethyl-4-phenylindenyl)zirconium dichloride,
phenylmethylsilanediyl-bis-1-(2-ethyl-4-naphthylindenyl)zirconium dichloride,
phenylmethylsilanediyl-bis-1-(2-methylacenaphthylindenyl)zirconium dichloride,
phenylmethylsilanediyl-bis-1-(2-methyl-4,5-benzoindenyl)zirconium dichloride,
dimethylsilanediyl-bis-1-(2-methyl-4,6-diisopropylindenyl)zirconium dichloride,
phenylmethylsilanediyl-bis-1-(2-methyl-4,6-diisopropylindenyl)zirconium dichloride,
dimethylsilanediyl-bis-1-(2-methyl-4-ethylindenyl)zirconium dichloride or
dimethylsilanediyl-bis-1-(2-methyl-4-isopropylindenyl)zirconium dichloride.

4. The process as claimed in one or more of claims 1 to 3, wherein an aluminoxane is used as the cocatalyst.

5. The process as claimed in one or more of claims 1 to 4, wherein olefins or diolefins having 2 to 18 carbon atoms are polymerized or copolymerized.

6. The process as claimed in one or more of claims 1 to 5, wherein the catalyst is used in a supported and/or prepolymerized form.

## Revendications

1. Procédé pour la préparation de polyoléfines par homopolymérisation ou copolymérisation d'au moins une oléfine à une température de 100 à 150 °C et sous une pression de 0,5 à 100 bar, en présence d'un catalyseur contenant au moins un métallocène et au moins un cocatalyseur, caractérisé en ce que le métallocène est un composé répondant à la formule I 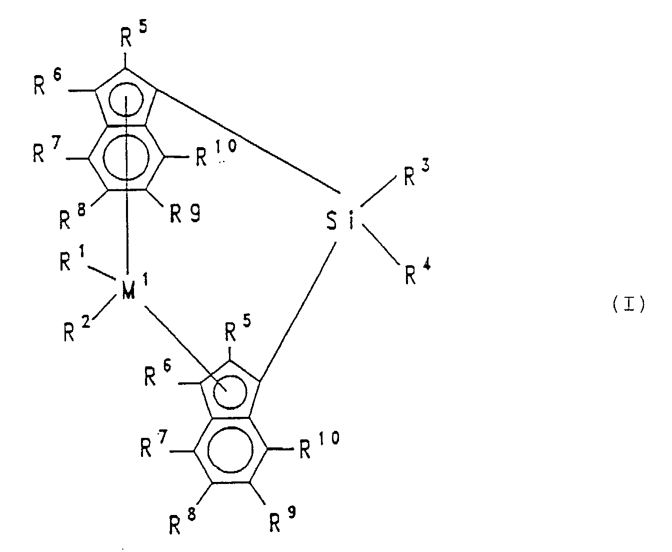 où M¹ représente le titane ou le zirconium,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un atome d'hydrogène, un atome d'halogène, un groupe alkyle en C₁-C₃₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcynyle en C₂-C₁₀, un groupe arylalkyle en C₇-C₄₀, un groupe arylalcényle en C₈-C₄₀ ou un groupe alkylaryle en C₇-C₄₀, ou R³ et R⁴ forment, à chaque fois ensemble avec les atomes les reliant, un cycle,
R⁵, R⁶, R⁷, R⁸, R⁹ et R¹⁰ sont identiques ou différents et représentent un atome d'hydrogène, un atome d'halogène, un groupe alkyle en C₁-C₃₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcynyle en C₂-C₁₀, un groupe arylalkyle en C₇-C₄₀, un groupe arylalcényle en C₈-C₄₀ ou un groupe alkylaryle en C₇-C₄₀ ou deux ou plusieurs des restes R⁵, R⁶, R⁷, R⁸, R⁹ et R¹⁰ forment, à chaque fois ensemble avec les atomes les reliant, un système de cycles.

2. Procédé selon la revendication 1, caractérisé en ce que le métallocène est un composé de formule I dans lequel M¹ représente le zirconium, R¹ et R² représentent un atome de chlore ou un groupe méthyle, R³ et R⁴ sont identiques ou différents et représentent un groupe alkyle en C₁-C₄ ou un groupe phényle, R⁵ représente un groupe alkyle en C₁-C₄, R⁶ représente un atome d'hydrogène et R⁷, R⁸, R⁹ et R¹⁰ représentent un atome d'hydrogène, un groupe alkyle en C₁-C₄ ou un groupe aryle en C₆-C₁₀ ou deux ou plusieurs restes R⁷, R⁸, R⁹ et R¹⁰ forment, ensemble avec les atomes les reliant, un système de cycles.

3. Procédé selon la revendication 1, caractérisé en ce que le métallocène de formule I est
dichlorure de diméthylsilanediyl-bis-1-(2-méthyl-4-phénylindényl)-zirconium,
dichlorure de diméthylsilanediyl-bis-1-(2-méthyl-4-(1-naphtyl)indényl)-zirconium,
dichlorure de diméthylsilanediyl-bis-1-(2-éthyl-4-(1-naphtyl)indényl)-zirconium,
dichlorure de diméthylsilanediyl-bis-1-(2-méthylacénaphtylindényl)-zirconium,
dichlorure de diméthylsil-bis-l-(2-méthyl-4,5-benzoindényl)-zirconium,
dichlorure de phénylméthylsilanediyl-bis-1-(2-méthyl-4-phénylindényl)-zirconium,
dichlorure de phénylméthylsilanediyl-bis-l-(2-méthyl-4-(1-naphtyl)indényl)-zirconium,
dichlorure de phénylméthylsilanediyl-bis-1-(2-éthyl-4-phénylindényl)-zirconium,
dichlorure de phénylméthylsilanediyl-bis-1-(2-éthyl-4-naphtylindényl)-zirconium,
dichlorure de phénylméthylsilanediyl-bis-1-(2-méthylacénaphtindényl)-zirconium,
dichlorure de phénylméthylsilanediyl-bis-1-(2-méthyl-4,5-benzoindényl)-zirconium,
dichlorure de diméthylsilanediyl-bis-1-(2-méthyl-4,6-diisopropylindényl)-zirconium,
dichlorure de phénylméthylsilanediyl-bis-1-(2-méthyl-4,6-diisopropylindényl)-zirconium,
dichlorure de diméthylsilanediyl-bis-1-(2-méthyl-4-éthylindényl)-zirconium, ou
dichlorure de diméthylsilanediyl-bis-1-(2-méthyl-4-isopropylindényl)-zirconium.

4. Procédé selon une ou plusieurs des revendications 1 à 3, caractérisé en ce que l'on utilise un aluminoxane en tant que cocatalyseur.

5. Procédé selon une ou plusieurs des revendications 1 à 4, caractérisé en ce que l'on polymérise ou copolymérise des oléfines ou des dioléfines avec 2 à 18 atomes de carbone.

6. Procédé selon une ou plusieurs des revendications 1 à 5, caractérisé en ce que l'on utilise le catalyseur supporté et/ou prépolymérisé.
